# EUROPEAN PATENT APPLICATION

(11) **EP 4 343 924 A1**
(43) Date of publication of application: **27.03.2024**
(21) Application number: 23199412.0
(22) Date of filing: 25.09.2023
(51) Int. Cl.: H01M 10/613, H01M 10/625, H01M 10/42, H01M 50/209, H01M 50/249, B60L 50/60, H01M 10/48

(54) **INDUSTRIAL WORK VEHICLE**

(30) Priority: 26.09.2022 IT 202200019668
(71) Applicant: Toyota Material Handling Manufacturing Italy S.p.A, 40132 Bologna (IT)
(72) Inventor: MATULLI, Luigi, BOLOGNA (IT); PIETROCOLA, Lucia, BOLOGNA (IT); FOLIGNO, Andrea, BOLOGNA (IT)
(74) Representative: Casadei, Barbara

(57) **Abstract**

Described is an industrial work vehicle comprising a frame (10) having a compartment (2) for housing at least one energy storage unit (3), preferably a lithium energy storage unit (3), equipped with an electronic module (4) comprising at least electronic power components (5); the industrial vehicle (1) comprises a system (6) for cooling the energy storage unit (3) and at least part of the electronic module (4) configured to remove at least part of the heat generated by the energy storage unit (3) and by the electronic module (4) towards the outside environment.

## Description

This invention relates to an industrial work vehicle, in particular a lift truck but without thereby limiting the scope of the invention.

Lift trucks are currently known for which the energy source is provided by lithium energy storage units.

The storage unit is a source of heat which is generally dissipated in a passive manner.

Moreover, lithium batteries comprise cells, modules and electric power components, such as, for example, remote control devices, shunt devices, fuses, converters and wiring, copper bars and the like, which produce heat which is also dissipated passively.

This leads to the strongly felt need to remove a greater quantities of heat from the energy storage unit and to make an industrial work vehicle as described in independent claim 1.

Advantageously, the removal of a greater quantity of heat allows the use of smaller energy storage units, with a consequent economic advantages, and it improves the operating condition of the components, increasing their service life in terms of operating hours.

Further features and advantages of this invention are more apparent in the detailed description below, with reference to a preferred, non-limiting, embodiment of an industrial work vehicle as illustrated in the accompanying drawings, in which:
- Figure 1 is a detail of a compartment for housing an energy storage unit of an industrial work vehicle according to the invention;
- Figure 2 is a top view, with some parts cut away to better illustrate others, of the housing compartment of the energy storage unit;
- Figure 3 is a scaled-up view of a detail of Figure 1;
- Figure 4 is a schematic perspective view of a detail of the energy storage unit;
- Figure 5 is a variant embodiment of the industrial vehicle according to the invention.

The numeral 1 denotes an industrial work vehicle according to the invention.

The industrial vehicle 1 comprises a frame 10 having a compartment 2 for housing at least one energy storage unit 3, preferably a lithium energy storage unit 3.

The energy storage unit 3 comprises a plurality of modules 15 positioned in such a way as to form a plurality of rows 3a parallel to each other.

Each module 15 has a top surface 15a where the respective cathode and anode poles 16 are positioned.

The energy storage unit 3 is equipped with an electronic module 4 comprising one or more electronic power components 5.

By way of example, the term electronic power components 5 means remote control devices, shunt devices, fuses, copper bars, poles, plugs-sockets.

According to the invention, the industrial vehicle 1 comprises a system 6 for cooling the energy storage unit 3 and at least part of the electronic module 4 configured to remove at least part of the heat generated by the energy storage unit 3 and by the electronic module 4 towards the outside environment.

The cooling system 6 is an air system.

The cooling system 6 comprises at least one external air inlet opening 8 in fluid communication with the housing compartment 2 and at least one discharge opening 9 leading towards the outside, which is also in fluid communication with the housing compartment 2.

The external air inlet opening 8 and the discharge opening 9 leading towards the outside are positioned in respective portions of the frame 10.

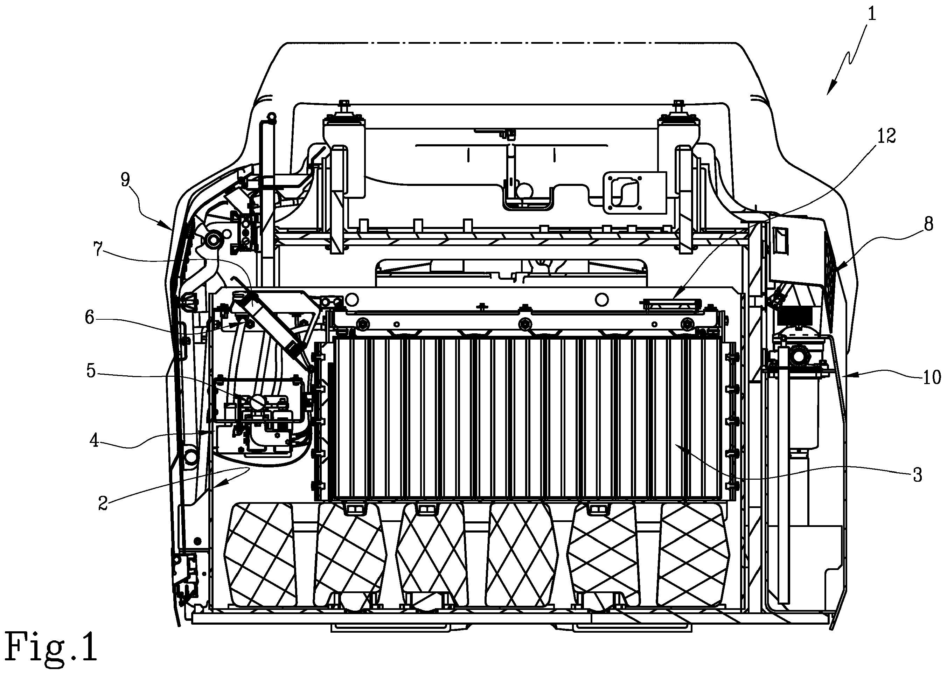

By way of example, the air inlet opening 8 and the discharge opening 9 are each positioned on a respective side wall of the frame 10, as illustrated in Figure 1.

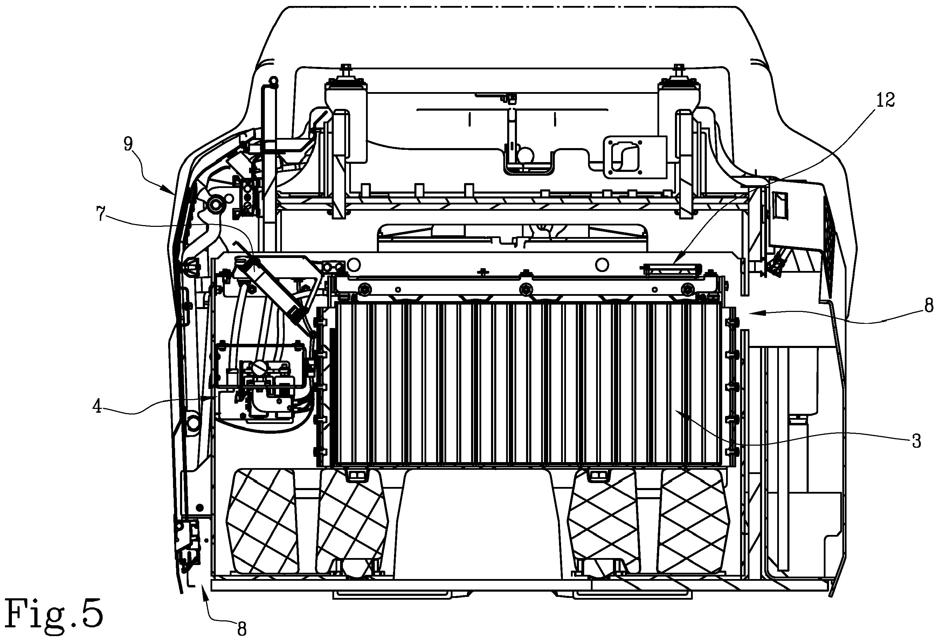

It should be noted that the air inlet opening 8 may be positioned at the bottom of the housing compartment 2 and/or along a side wall of the housing compartment, as schematically illustrated in Figure 5.

For example, the air inlet opening 8 and the discharge opening 9 may be made from respective grid elements or may be made from respective conveyors.

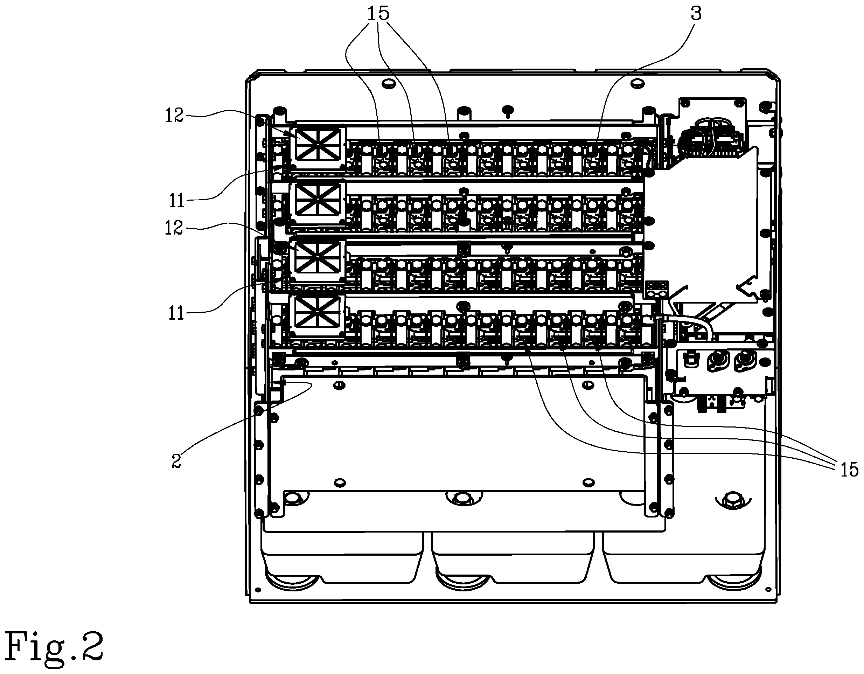

The housing compartment 2 has a plurality of openings 11 for access of the air inside the compartment 2, as schematically illustrated in Figure 2.

At each opening 11 there is a filtering element 12.

The access openings 11 are positioned above the energy storage unit 3 along a same side of the compartment 2.

Each opening 11 is located above a respective row 3a defined by the modules of the storage unit 3.

The cooling system 6 comprises at least one rotary member 7 for conveying the air from the inlet opening 8 to the outlet opening 9 through the compartment 2.

Drive means 17 control the movement of the rotary member 7.

In particular, the air drawn by the inlet opening 8 enters inside the compartment 2 through the access openings 11 and is conveyed towards the discharge opening 9 by the rotary member 7.

Advantageously, the rotary member 7 imparts to the air a predetermined path along which it actively removes heat from the energy storage unit 3.

Relative to the positioning of the energy storage unit 3 in the compartment 2, the rotary member 7 is positioned on the opposite side of the access openings 11.

The rotary member 7 is in the form of fan rotating about a relative axis of rotation 7a.

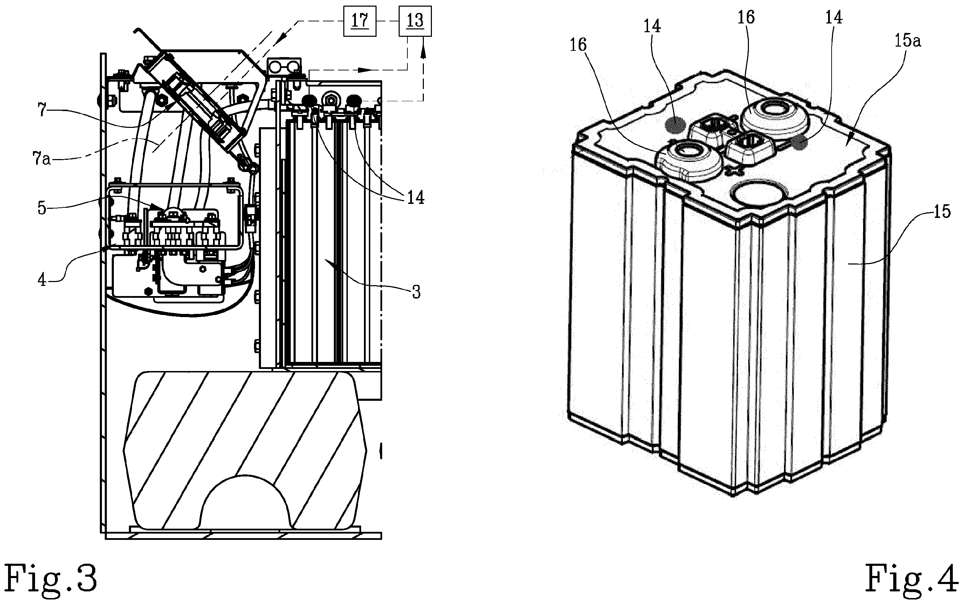

According to the invention, the rotary member 7 is positioned above at least part of the electronic module 4 in such a way that it can also remove part of the heat generated by the electronic module 4, as illustrated in Figure 3.

Advantageously, the rotary member 7 not only causes the removal of the heat of the energy storage unit 3, but also draws hot air from the electronic module 4.

A command and control unit 13 is configured for activating or deactivating the drive means 17 of the rotary member 7 on the basis of the temperature value measured by one or more sensors 14 positioned at the energy storage unit 3 and/or the electronic module 4 and on the basis of a respective operating condition of the energy storage unit 3. Preferably, the sensors 14 are positioned in each module 15 of the energy storage unit 3, at the top surface 15a of the module 15.

In particular, there are at least two sensors 14 for each module 15, as shown in Figure 4.

An operating condition of the energy storage unit 3 is determined during operation of the industrial vehicle 1.

A further operating condition of the energy storage unit 3 is determined during the charging of the energy storage unit 3.

The command and control unit 13 is configured for activating the rotary member 7 if a temperature value measured by at least one sensor 14 exceeds a maximum temperature threshold value and for deactivating the rotary member 7 if the temperature measured by the sensor 14 is below the maximum temperature threshold value.

The command and control unit 13 is configured to receive the maximum temperature threshold value in relation to an operating condition of the energy storage unit 3.

Advantageously, the insertion of a temperature threshold value associated with an operating condition of the energy storage unit 3 allows the use of the rotary member 7 and, therefore, its capacity for intervention to be increased or decreased.

Preferably, the command and control unit 13 is configured for controlling the operations of the energy storage unit 3.

## Claims

1. An industrial work vehicle comprising a frame (10) having a compartment (2) for housing at least one energy storage unit (3), preferably a lithium energy storage unit (3), equipped with an electronic module (4) comprising at least electronic power components (5);
the industrial vehicle (1) comprises a system (6) for cooling the energy storage unit (3) and at least part of the electronic module (4) configured to remove at least part of the heat generated by the energy storage unit (3) and by the electronic module (4) towards the outside environment;
the cooling system (6) is an air system;
the cooling system (6) comprises at least one external air inlet opening (8) in fluid communication with the compartment (2) and at least one discharge opening (9) leading towards the outside, also in fluid communication with the compartment (2) and at least one rotary member (7), positioned inside the compartment (2), for conveying the air from the inlet opening (8) to the discharge opening (9) through the compartment (2);
the rotary member (7) is positioned above at least part of the electronic module (4); **characterized in that**,
the housing compartment (2) has a plurality of air access openings (11) each having a respective filtering element (12); each opening (11) is located above a respective row (3a) defined by the modules of the storage unit (3);
relative to the positioning of the storage unit (3) in the compartment (2), the rotary member (7) is positioned on the opposite side of the access openings (11).

2. The vehicle according to any one of the preceding claims, **characterised in that** it comprises a command and control unit (13) configured for activating or deactivating the movement of the rotary member (7) on the basis of the temperature value measured by one or more sensors (14) positioned at the energy storage unit (3) and/or at the electronic module (4) and on the basis of an operating condition of the energy storage unit (3).

3. The vehicle according to claim 2, **characterised in that** the command and control unit (13) is configured for activating the movement of the rotary member (7) if a temperature value measured by a respective sensor (14) exceeds a maximum temperature threshold value and for deactivating the rotary member (7) if the temperature measured by the sensor (14) is below the maximum temperature threshold value.

4. The vehicle according to claim 2 or 3, **characterised in that** the command and control unit (13) is configured to receive the maximum temperature threshold value in relation to an operating condition of the energy storage unit (3).

5. The vehicle according to any one of the preceding claims, **characterised in that** the one or more inlet openings (8) are positioned at the bottom of the housing compartment (2).

6. The vehicle according to any one of the preceding claims, **characterised in that** the one or more inlet openings (8) are positioned at a side of the housing compartment (2).

7. The vehicle according to any one of the preceding claims, **characterised in that** the one or more inlet openings (8) are positioned above the housing compartment (2).
